# EUROPÄISCHE PATENTSCHRIFT

(11) **EP 1 683 320 B1**
(45) Veröffentlichungstag und Bekanntmachung des Hinweises auf die Patenterteilung: **20.05.2015**
(21) Anmeldenummer: 04791204.3
(22) Anmeldetag: 12.10.2004
(51) Int. Cl.: H04Q 3/00

(54) **VERFAHREN ZUM AUFBAUEN EINER KOMMUNIKATIONSVERBINDUNG**
METHOD FOR THE ESTABLISHMENT OF A COMMUNICATION LINK
PROCÉDÉ POUR ÉTABLIR UNE COMMUNICATION

(30) Priorität: 10.11.2003 DE 10352378
(43) Veröffentlichungstag der Anmeldung: 26.07.2006
(60) Teilanmeldung: 10009505.8
(73) Patentinhaber: Siemens Aktiengesellschaft, 80333 München (DE)
(72) Erfinder: KOWALEWSKI, Frank, 38228 Salzgitter (DE); SCHMIDT, Holger, 38102 Braunschweig (DE)
(86) Internationale Anmeldenummer: PCT/EP2004/052512
(87) Internationale Veröffentlichungsnummer: WO 2005/046161

(56) Entgegenhaltungen:
- EP-A2- 1 263 204
- HANDLEY M ET AL: "RFC 2543 SIP: Session Initiation Protocol" NETWORK WORKING GROUP REQUEST FOR COMMENTS, XX, XX, März 1999 (1999-03), Seiten 1-153, XP000864299

## Beschreibung

Die vorliegende Erfindung betrifft ein Verfahren zum Aufbauen einer Kommunikationsverbindung von einem ersten Telekommunikationsgerät über ein Telekommunikationsnetz zu einem zweiten Telekommunikationsgerät, und betrifft insbesondere ein Verfahren, bei dem bei der Rufsignalisierung bei dem zweiten Telekommunikationsgerät Datenobjekte, welche beispielsweise Bilder oder Töne des Benutzers des ersten Telekommunikationsgeräts beinhalten, abgespielt werden.

Eine Kommunikation zwischen Personen mittels Telefonie, insbesondere der Mobiltelefonie, kommt in zunehmendem Maße Bedeutung zu. Dabei ist es für einen Telekommunikationsteilnehmer insbesondere beim Aufbauen einer Telefonverbindung wichtig, wenn er die Identität des Anrufers vor der Beantwortung bzw. der Entgegennahme des Rufs kennt. Hierzu kann der angerufene Telekommunikationsteilnehmer verschiedene Einrichtungen verwenden, um die Anruferidentifizierung beispielsweise in der Form des Namens und der Telefonnummer des Anrufers anzuzeigen. Bei einer Methode ist dabei in dem Telekommunikationsgerät des angerufenen Telekommunikationsteilnehmers eine Datenbank beispielsweise in der Form eines elektronischen Telefonbuchs vorgesehen, in der Telefonnummern und dazugehörige Namen, aber auch ein Bild zu dem jeweiligen Namen gespeichert sind. Somit kann bei einem Anruf, bei dem gewöhnlicher Weise die Rufnummer des Anrufers übertragen wird, das Telekommunikationsgerät des angerufenen den zugehörigen Namen sowie das Bild des Anrufers in der Datenbank ermitteln und neben der Telefonnummer und dem Namen auch das Bild des Anrufers anzeigen.

Somit ist von Nachteil, dass die unter Umständen umfangreiche Datenbank im Telefon des Rufempfängers vorgehalten werden muss und, dass sie in jedem Telefon eines Rufempfängers vorgehalten werden muss.
muss und, dass sie in jedem Telefon eines Rufempfängers vorgehalten werden muss.

Aus dem Dokument EP 1 263 204 A2 (ALCATEL) ist ein Verfahren zum Anzeigen eines Rufes bei einem Rufempfänger mithilfe eines ausgewählten Rufzeichens, z.B. eines Bildes, bekannt, bei dem in einer Datenbank des Netzes für einen jeweiligen Rufempfänger eine Zuordnung zwischen der Rufnummer des Anrufers und dem an den Rufempfänger zu übermittelnden Rufzeichen abgespeichert ist, wobei die genannte Zuordnung durch den Rufempfänger oder den Netzbetreiber festlegbar ist.

Als Nachteil bei einem Verfahren gemäß einer der vorgenannten Methoden stellt sich heraus, dass der Anrufer selbst keinen Einfluss auf das angezeigte Bild hat. Die Einstellungen zum Anzeigen und die Auswahl des Bildes liegen hier beim Rufempfänger, wobei der Anrufer die Anzeige eines bestimmten Bildes weder erzwingen kann noch das angezeigte Bild aktualisieren oder aber auch dem Rufempfänger ein aktuelles Bild zukommen lassen kann.

Es ist somit eine Aufgabe der vorliegenden Erfindung, eine flexible Möglichkeit zum Aufbauen einer Kommunikationsverbindung zu schaffen, bei der der Anrufer Kontrolle über die bei der Rufsignalisierung übertragenen Datenobjekte hat.

Diese Aufgabe wird durch die unabhängigen Ansprüche gelöst. Vorteilhafte Ausgestaltungen sind Gegenstand der Unteransprüche.

Dabei wird gemäß einem ersten Aspekt der Erfindung bei einem Verfahren zum Aufbauen einer Kommunikationsverbindung von einem ersten Telekommunikationsgerät eines ersten Telekommunikationsteilnehmers über ein Telekommunikationsnetz zu einem zweiten Telekommunikationsgerät eines zweiten Telekommunikationsteilnehmers zunächst eine Verbindungsaufbaunachricht mit einem dem ersten Telekommunikationsteilnehmer zugeordneten Datenobjekt zum Telekommunikationsnetz gesendet, um den Aufbau einer Kommunikationsverbindung, insbesondere Telefonverbindung, zum zweiten Telekommunikationsgerät zu initiieren. Ein derartiges Datenobjekt kann beispielsweise multimediale Daten aufweisen, welche eine Bilddatei, eine Tondatei oder auch eine Textdatei usw. umfassen. Anschließend speichert das Telekommunikationsnetz das gesendete Datenobjekt auf einer mit dem Telekommunikationsnetz verbundenen Datenbereitstellungskomponente, wie einem Datenserver. Mit dem Speichern des Datenobjekts wird auch eine Referenzinformation ermittelt, welche den Speicherort des Datenobjekts angibt, d. h. auf welcher Datenbereitstellungskomponente bzw. in welchem Speicherbereich dort das Datenobjekt gespeichert ist. Schließlich findet eine Übertragung einer Rufsignalisierungsnachricht von dem Telekommunikationsnetz zu dem zweiten Telekommunikationsgerät statt, wobei in der Rufsignalisierungsnachricht die (ermittelte) Referenzinformation vorgesehen ist. Die Referenzinformation kann beispielsweise zu diesem Zweck einen "Uniform Resource Identifier" (URI) aufweisen. Da nun die Referenzinformation beim zweiten Telekommunikationsgerät vorliegt, kann dieses selbst über das weitere Vorgehen entscheiden. Zum Einen kann es sich dafür entscheiden, den Ruf des Anrufers (ersten Telekommunikationsteilnehmers) ohne Kenntnis dessen Datenobjekts, insbesondere dessen Bildes, anzunehmen und direkt eine Kommunikationsverbindung, wie eine Telefonverbindung aufbauen. Es ist jedoch auch möglich, dass der Rufempfänger (zweiter Telekommunikationsteilnehmer) das Datenobjekt des Anrufers gerne auf sein Telekommunikationsgerät übertragen möchte, wobei er in diesem Fall der Datenbereitstellungskomponente unter Verwendung der Referenzinformation (d.h. durch die Referenzinformation wird ermittelt, auf welcher Datenbereitstellungskomponente bzw. in welchem Speicherbereich dort) signalisiert, dass die Datenbereitstellungskomponente das dem ersten Telekommunikationsteilnehmer zugeordnete Datenobjekt an das zweite Telekommunikationsgerät übertragen soll. Ansprechend auf diese Signalisierung übermittelt die Datenbereitstellungskomponente das Datenobjekt an das zweite Telekommunikationsgerät, so dass dieses das Datenobjekt empfangen und abspielen kann. Der Begriff Abspielen bedeutet dabei in Bezug auf ein im Datenobjekt enthaltenes Bild bzw. einen Text, dass diese angezeigt werden, und bedeutet bezüglich einer im Datenobjekt gespeicherten Toninformation bzw. einem Klingelton, dass dieser vom zweiten Telekommunikationsgerät hörbar gemacht wird. Durch das gerade beschriebene Verfahren ist es somit möglich, dass sowohl der Anrufer als auch der angerufene Telekommunikationsteilnehmer Kontrolle über das vom Anrufer bereitgestellte Datenobjekt haben.

Hat nun der zweite Telekommunikationsteilnehmer das Datenobjekt des ersten Telekommunikationsteilnehmers abgespielt, insbesondere dessen Bild anzeigen lassen, so kann er sich dafür entscheiden, den Anruf des ersten Telekommunikationsteilnehmers anzunehmen, und zu diesem eine Kommunikationsverbindung bzw. (bidirektionale) Sprachverbindung aufbauen.

Gemäß einer vorteilhaften Ausgestaltung weist das Telekommunikationsnetz ein erstes Teilnetz auf, dem das erste Telekommunikationsgerät zugeordnet ist, und weist ein zweites Telekommunikationsnetz auf, dem das zweite Telekommunikationsgerät zugeordnet ist, wobei die beiden Teilnetze über eine Vermittlungskomponente, ein sogenanntes "Gateway" miteinander verbunden sind. Insbesondere können die beiden Teilnetze, aber auch das gesamte Telekommunikationsnetz als ein Mobilfunknetz ausgebildet sein, das beispielsweise nach dem GSM(Global System for Mobile Communication)-Standard oder dem UMTS (Universal Mobile Telecommunications System)-Standard arbeitet. Dabei kann dann das erste Telekommunikationsgerät im ersten Teilnetz eingebucht sein, während das zweite Telekommunikationsnetz im zweiten Teilnetz eingebucht ist.

Gemäß einer weiteren vorteilhaften Ausgestaltung ist die Vermittlungskomponente dafür ausgelegt, die oben aufgeführten Schritte des Telekommunikationsnetzes (wie den Schritt des Speicherns des Datenobjekts und die Übertragung einer Rufsignalisierungsnachricht) durchzuführen. Es ist ferner denkbar, dass die Datenbereitstellungskomponente in einem auf einem Internetprotokoll basierenden Netz angeordnet ist, das mit der Vermittlungskomponente in Verbindung steht. Insbesondere ist es dabei möglich, dass das Datenobjekt von der Vermittlungskomponente über das "Hyper Text Transfer Protocol" (http) zur Datenbereitstellungskomponente übertragen wird.

Es ist denkbar, dass sich das zweite Telekommunikationsgerät während des Verbindungsaufbaus in einer Kommunikationssitzung gemäß dem "Session Initiation Protocols" SIP befindet, mit dessen Hilfe interaktive Multimedia-Kommunikationssitzungen initiiert und kontrolliert werden können. Insbesondere können Telefongespräche mit zusätzlicher Übertragung von Datenobjekten, wie Multimedia-Informationen, initiiert werden. Dazu kann das Telekommunikationsnetz bzw. die Vermittlungskomponente als Rufsignalisierungsnachricht eine sogenannte SIP-"INVITE"-Nachricht an das zweite Telekommunikationsgerät senden, um es zu einer Kommunikationssitzung einzuladen. In die INVITE-Nachricht ist auch die Referenzinformation bezüglich des Speicherorts des Datenobjekts des ersten Telekommunikationsteilnehmers eingefügt. Bevor die eigentliche Kommunikationssitzung gemäß dem SIP beginnt, kann nun vom zweiten Telekommunikationsgerät das Datenobjekt mittels der Referenzinformation angefordert werden. Derartige vor der eigentlichen Kommunikationssitzung übertragenen Daten heißen im Zusammenhang mit SIP auch "frühe Daten" oder "Early Media". Auf diese Weise kann gemäß der gerade erwähnten vorteilhaften Ausgestaltung des Verfahrens zum Aufbau einer Kommunikationsverbindung eine derartige Kommunikationsverbindung auch zwischen einem Telekommunikationsgerät, das das SIP-Protokoll nicht unterstützt, und einem Telekommunikationsgerät, das das SIP-Protokoll unterstützt, aufgebaut werden.

Gemäß einer vorteilhaften Ausgestaltung ist das erste und/oder zweite Telekommunikationsgerät je nach der Art des mit diesem verbundenen Telefonnetzes oder Telekommunikationsteilnetz als ein Mobilfunkgerät, Mobiltelefon oder ein Computer, wie ein PDA (Personal Digital Assistant) oder Organizer, mit einem Funkmodul ausgebildet.

Des Weiteren wird eine Telekommunikationsanordnung geschaffen, welche ein erstes und ein zweites Telekommunikationsgerät sowie ein Telekommunikationsnetz umfasst. Dabei ist das erste Telekommunikationsgerät dafür ausgelegt, über das Telekommunikationsnetz eine Kommunikationsverbindung, insbesondere Telefonverbindung, zu dem zweiten Telekommunikationsgerät gemäß einem oben beschriebenen Verfahren aufzubauen.

Es wird ferner ein Verfahren zum Aufbauen einer Kommunikationsverbindung (insbesondere Telefonverbindung) von einem ersten Telekommunikationsgerät eines ersten Telekommunikationsteilnehmers über ein Telekommunikationsnetz zu einem zweiten Telekommunikationsgerät eines zweiten Telekommunikationsteilnehmers gemäß einem zweiten Aspekt der Erfindung geschaffen. Gemäß diesem Verfahren wird zunächst ein Datenobjekt des ersten Telekommunikationsteilnehmers auf einer Datenbereitstellungskomponente gespeichert. Dies kann auf vielerlei herkömmliche Arten der Datenübertragung geschehen, beispielsweise durch Senden einer E-Mail oder Nachricht gemäß dem MMS (Multimedia Messaging Service) vom ersten Telekommunikationsteilnehmer an den Betreiber der Datenbereitstellungskomponente, damit dieser ein in der E-Mail gespeichertes Datenobjekt auf der Datenbereitstellungskomponente speichert. Die Datenbereitstellungskomponente bzw. deren Betreiber kann daraufhin eine Bestätigungsnachricht an das erste Telekommunikationsnetz zurücksenden, in der eine Referenz(information) enthalten ist, die die Adresse des Speicherorts angibt. Zum Einleiten des Aufbaus einer Kommunikationsverbindung wird nun eine Verbindungsaufbaunachricht zusammen mit der Referenz, die auf das in der Datenbereitstellungskomponente gespeicherte Datenobjekt hinweist, von dem ersten Telekommunikationsgerät zu dem Telekommunikationsnetz gesendet. Unter Zuhilfenahme der in der Verbindungsaufbaunachricht enthaltenen Referenzinformation signalisiert das Telekommunikationsnetz der Datenbereitstellungskomponente, dass diese das gespeicherte Datenobjekt des ersten Telekommunikationsteilnehmers an das Telekommunikationsnetz übertragen soll. Ansprechend auf diese Signalisierung übermittelt dann die Datenbereitstellungskomponente das vom Telekommunikationsnetz angeforderte Datenobjekt an das Telekommunikationsnetz. Anschließend überträgt das Telekommunikationsnetz dann eine Rufsignalisierungsnachricht zu dem zweiten Telekommunikationsgerät, wobei in der Rufsignalisierungsnachricht das übermittelte Datenobjekt vorgesehen ist. Das übertragene Datenobjekt kann dann vom zweiten Telekommunikationsgerät abgespielt werden, insbesondere kann ein in dem Datenobjekt enthaltenes Bild des ersten Telekommunikationsteilnehmers beim zweiten Telekommunikationsgerät angezeigt werden.

Nachdem nun der zweite Telekommunikationsteilnehmer durch das Abspielen des Datenobjekts des ersten Telekommunikationsteilnehmers darüber informiert worden ist, dass der erste Telekommunikationsteilnehmer eine Kommunikationsverbindung aufbauen möchte, kann der zweite Telekommunikationsteilnehmer durch entsprechende Bedienung (Drücken eines Annahmeknopfes) am zweiten Telekommunikationsgerät den Ruf annehmen und somit eine Kommunikationsverbindung, wie eine Telefonverbindung, zustande kommen lassen.

Wiederum kann gemäß einer vorteilhaften Ausgestaltung das Telekommunikationsnetz ein erstes Teilnetz, das dem ersten Telekommunikationsgerät zugeordnet ist, und ein zweites Teilnetz, das dem zweiten Telekommunikationsgerät zugeordnet ist, aufweisen, wobei die beiden Teilnetze über eine Vermittlungskomponente, ein sogenanntes "Gateway", miteinander verbunden sind. Dabei können das erste und das zweite Teilnetz sowie auch das gesamte Telekommunikationsnetz als ein Mobilfunknetz ausgebildet sein, das nach dem GSM- oder UMTS-Standard arbeitet. Entsprechend können in diesem Fall das erste und das zweite Telekommunikationsgerät als ein Mobilfunkgerät, ein Mobiltelefon oder als ein Computer mit einem entsprechenden Funkmodul ausgebildet sein.

Gemäß einer vorteilhaften Ausgestaltung ist dabei die Vermittlungskomponente, das Gateway, derart ausgelegt, um die oben aufgeführten Verfahrensschritte im Telekommunikationsnetz auszuführen, insbesondere den Schritt des Signalisierens der Datenbereitstellungskomponente sowie den Schritt des Übertragens der Rufsignalisierungsnachricht an das zweite Telekommunikationsgerät. Ferner kann die Datenbereitstellungskomponente in einem auf einem Internetprotokoll basierenden Netz angeordnet sein, das mit der Vermittlungskomponente verbunden ist, so dass beispielsweise eine Übertragung eines Datenobjekts von der Datenbereitstellungskomponente an das Telekommunikationsnetz bzw. die Vermittlungskomponente über ein http-Protokoll erfolgen kann.

Gemäß einer weiteren vorteilhaften Ausgestaltung weist die Referenzinformation einen Uniform Resource Identifier (URI) auf, der den Speicherort des Datenobjekts des ersten Telekommunikationsteilnehmers angibt.

Im Gegensatz zum ersten Aspekt der Erfindung kann beim zweiten Aspekt der Erfindung das erste Telekommunikationsgerät sich in einer Kommunikationssitzung gemäß dem SIP-Protokoll befinden, während sich das zweite Telekommunikationsgerät nicht in einer derartigen Kommunikationssitzung befindet. Das Netzwerk bzw. die Vermittlungskomponente dient somit als Schnittstelle zwischen einem SIP-Telekommunikationsgerät und einem Nicht-SIP-Telekommunikationsgerät. Als Verbindungsaufbaunachricht sendet in diesem Zusammenhang das erste Telekommunikationsgerät eine sogenannte "INVITE"-Nachricht an das Telekommunikationsnetz bzw. die Vermittlungskomponente, um anzuzeigen, das eine Kommunikationsverbindung mit dem zweiten Telekommunikationsgerät aufgebaut werden soll. In der INVITE-Nachricht ist ferner die Referenzinformation auf das auf der Datenbereitstellungskomponente gespeicherte Datenobjekt mit enthalten. Nach Anfordern des Datenobjekts von der Datenbereitstellungskomponente und Versenden des Datenobjekts an das zweite Telekommunikationsgerät, kann dann das Telekommunikationsnetz, insbesondere die Vermittlungskomponente eine vorläufige Bestätigungsnachricht an das erste Telekommunikationsgerät senden, die angibt, dass dem zweiten Telekommunikationsteilnehmer vom zweiten Telekommunikationsgerät der gewünschte Verbindungsaufbau beispielsweise durch Klingeln lassen signalisiert wird.

Gemäß einer Ausgestaltung kann das Datenobjekt multimediale Inhalte wie Bildinformationen, Toninformationen oder auch Textinformationen aufweisen.

Des Weiteren wird eine Telekommunikationsanordnung geschaffen, welche ein erstes und ein zweites Telekommunikationsgerät sowie ein Telekommunikationsnetz umfasst. Dabei ist das erste Telekommunikationsgerät dafür ausgelegt, über das Telekommunikationsnetz eine Kommunikationsverbindung, insbesondere eine Telefonverbindung zu dem zweiten Telekommunikationsgerät gemäß einem oben beschriebenen Verfahren nach dem zweiten Aspekt der Erfindung aufzubauen.

Bevorzugte Ausführungsformen der vorliegenden Erfindung werden nachfolgend Bezug nehmend auf die beiliegenden Zeichnungen näher erläutert. Es zeigen:
- Figur 1: ein Blockschaltbild einer Telekommunikationsanordnung zur Erläuterung des Aufbaus einer Kommunikationsverbindung zwischen zwei Telekommunikationsgeräten, welche sich in einer Kommunikationssitzung gemäß dem SIP-Protokoll befinden;
- Figur 2: ein Ablaufdiagramm des Aufbaus einer Kommunikationsverbindung zwischen den in Figur 1 dargestellten Telekommunikationsgeräten;
- Figur 3: ein Blockschaltbild einer Telekommunikationsanordnung gemäß einer ersten Ausführungsform der Erfindung zur Erläuterung des Aufbaus einer Kommunikationsverbindung zwischen einem Telekommunikationsgerät, das das SIP-Protokoll unterstützt und einem Telekommunikationsgerät, das das SIP-Protokoll nicht unterstützt.
- Figur 4: ein Ablaufdiagramm zum Darstellen des Aufbaus einer Kommunikationsverbindung der in Figur 3 gezeigten Telekommunikationsgeräte;
- Figur 5: ein Blockschaltbild einer Telekommunikationsanordnung gemäß einer zweiten Ausführungsform der Erfindung zur Darstellung des Aufbaus einer Kommunikationsverbindung zwischen einem Telekommunikationsgerät, das das SIP-Protokoll nicht unterstützt und einem Telekommunikationsgerät, das das SIP-Protokoll unterstützt;
- Figur 6: ein Ablaufdiagramm zum Erläutern des Aufbaus einer Kommunikationsverbindung zwischen den in Figur 5 gezeigten Telekommunikationsgeräten.

Bevor nun zwei bevorzugte Ausführungsformen der Erfindung erläutert werden, bei denen der Aufbau einer Kommunikationsverbindung zwischen einem Telefon, das das SIP-Protokoll unterstützt, und einem Telefon, das das SIP-Protokoll nicht unterstützt, stattfinden soll, soll jedoch kurz auf das SIP (Session Initiation Protocol) eingegangen werden.

Mit Hilfe des SIP-Protokoll (siehe z.B. das Dokument von Handley M. et al.: "RFC 2543 SIP: Session Initiation Protocol" Network Working Group, Request for Comments, xx,xx, Märez 1999 (1999-03), Seiten 1-153, XP 000864299) können interaktive Multimedia-Kommunikationssitzungen initiiert und gesteuert werden. Insbesondere können Kommunikationsverbindungen, wie Telefonverbindungen bzw. Telefongespräche mit zusätzlicher Übertragung von Multimedia-Informationen initiiert werden. Gemäß dem SIP-Protokoll kann ein erster Teilnehmer einen zweiten Teilnehmer mit der sogenannten SIP-Nachricht "INVITE" zu einer Sitzung bzw. "Session" einladen. Der zweite Teilnehmer kann dann die Einladung annehmen (um die Kommunikationsverbindung, wie ein Telefongespräch zustande kommen zu lassen), indem der er mit der sogenannten SIP-Nachricht "200-OK" antwortet. In der Zeit zwischen dem Eingang der INVITE-Nachricht und der Bestätigung des Aufbaus der Verbindung bzw. Kommunikationssitzung durch die "200-OK"-Nachricht können jedoch schon Datenobjekte, wie Multimediadaten übertragen werden. Solche Daten werden auch als "frühe Daten" bzw. "frühe Medien" ("Early Media") bezeichnet. Bei den frühen Daten kann es sich auch um Bilddaten bzw. Bilder handeln, die dem Anrufer zugeordnet sind oder diesen darstellen. Durch dieses gerade beschriebene Verfahren lassen sich also im Rahmen des SIP-Protokolls Anrufbilder beim Aufbauen einer Kommunikationsverbindung übertragen.

Eine besondere Form der Übertragung von Datenobjekten, insbesondere Bilddaten, besteht in der Übertragung von Referenzinformationen bzw. Bildreferenzinformationen, die auf den Ort verweisen, an dem der eigentliche Bildinhalt zu finden ist bzw. gespeichert ist. Auch das SIP-Protokoll unterstützt die Möglichkeit, anstatt die eigentlichen Datenobjekte oder Bildinhalte über das SIP-Protokoll zu transportieren, die Objekte bzw. Inhalte per Referenzinformation zu verschicken. Dieser Mechanismus wird als "Content Indirection" ("Inhalt über Umwege") bezeichnet.

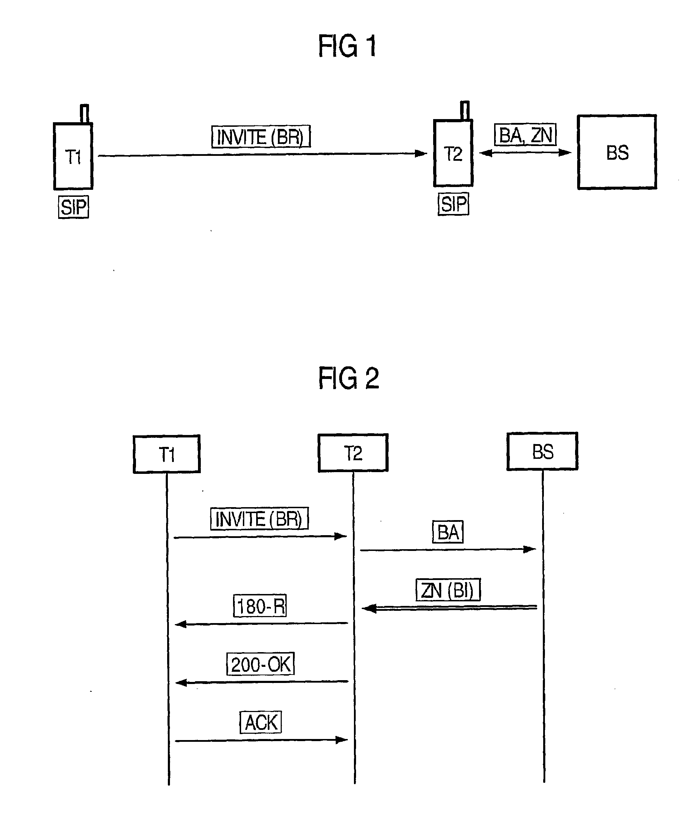

Im Folgenden soll nun ein Aufbau einer Kommunikationsverbindung zwischen zwei das SIP-Protokoll unterstützenden Telekommunikationsgeräten mit Übertragung von Anrufbildern erläutert werden. Bei den Telekommunikationsgeräten kann es sich dabei beispielsweise um Mobiltelefone handeln. In Figur 1 ist dabei ein Blockschaltbild der wichtigsten Komponenten beim Aufbau der Kommunikationsverbindung von einem ersten Mobiltelefon T1 zu einem zweiten Mobiltelefon T2, welche beide das SIP-Protokoll unterstützen, dargestellt. Wie es gleich bezüglich Figur 2 ausführlich erläutert werden wird, wird mit einer SIP-Nachricht "INVITE", welche vom rufenden Mobiltelefon T1 zum angerufenen Mobiltelefon T2 übertragen wird, ferner eine Referenz BR auf ein Bild eines dem ersten Mobiltelefon T1 zugeordneten Telekommunikationsteilnehmers mit übertragen. Unter Verwendung der Referenz BR fordert nun das zweite Mobiltelefon T2 in der Verbindungsaufbauphase mittels einer Nachricht BA den der Referenz zugeordneten Bildinhalt bzw. das eigentliche Bild von einer Datenbereitstellungskomponente in diesem Fall einem Bildserver BS, an, und erhält mittels einer Nachricht ZN das Bild BI zugestellt.

Der gerade beschriebene Vorgang soll nun unter Zuhilfenahme von Figur 2 ausführlich dargestellt werden. Wie oben bereits erwähnt lädt das erste Mobiltelefon T1 das zweite Mobiltelefon T2 mittels der SIP-Nachricht "INVITE" zum Aufbau einer Kommunikationsverbindung bzw. zum Aufbauen einer Kommunikationssitzung ein. Durch einen sogenannten "Accept Header" (Annahme-Nachrichtenvorsatz) beim Übertragen der INVITE-Nachricht zeigt das erste Mobiltelefon T1 an, dass es "Content Indirection" unterstützt. Mit der INVITE-Nachricht wird außerdem im Rahmen vom "Early Media" eine Referenz BR auf ein beim zweiten Mobiltelefon anzuzeigendes Bild übertragen. Die Referenz umfasst dabei einen sogenannten SIP-URI (URI: Uniform Resource Identifier = einheitliche Quellenidentifizierungsangabe). Der URI könnte beispielsweise folgendermaßen lauten: "http:\\www.mysite.org\images\portraet.gif". Nun fordert das zweite Mobiltelefon T2 mittels einer Bildanforderungsnachricht BA unter Zuhilfenahme der übertragenen Referenz BR das Bild von der Datenbereitstellungskomponente bzw. dem Bildserver BS an. Im vorliegenden Fall wird davon ausgegangen, dass das Bild BI per http (Hyper Text Transfer Protocol) vom Web-Server der Datenbereitstellungskomponente BS mit der Internet-Adresse: "www.mysite.org" angefordert und mittels einer Zustellnachricht ZN dem zweiten Mobiltelefon T2 zugesandt wird. Daraufhin wird das Bild BI auf einer Anzeige (nicht dargestellt) des Mobiltelefons T2 dargestellt, so dass der dem zweiten Mobiltelefon T2 zugeordnete Telekommunikationsteilnehmer das Anrufbild des ersten Telekommunikationsteilnehmers sehen kann und somit weiß, von wem der Anruf kommt. Während der Darstellung des Anrufbildes wird ferner von dem zweiten Mobiltelefon T2 ein akustisches Signal in Form eines sogenannten Klingeltons ausgegeben, der den zweiten Telekommunikationsteilnehmer auch akustisch darüber informieren soll, dass vom ersten Telekommunikationsteilnehmer ein Anruf eingeht. Während des Abspielens des Klingeltons beantwortet das zweite Mobiltelefon T2 die Einladungsnachricht INVITE mit der vorläufigen Antwort ("Provisional Response") 180-R, die angibt, dass es beim zweiten Mobiltelefon "klingelt".

In dieser Rufaufbauphase kann sich nun der Telekommunikationsteilnehmer des zweiten Mobiltelefons T2 entscheiden, ob er den Ruf des ersten Teilnehmers annimmt, oder nicht. Im vorliegenden Beispiel nimmt der zweite Telekommunikationsteilnehmer bzw. das zweite Mobiltelefon T2 den Ruf an und bestätigt dies mit der SIP-Antwort 200-OK, die das zweite Mobiltelefon an das erste Mobiltelefon sendet. Auch das erste Mobiltelefon T1 bestätigt nun den Eingang der Nachricht 200-OK mit der Nachricht ACK.

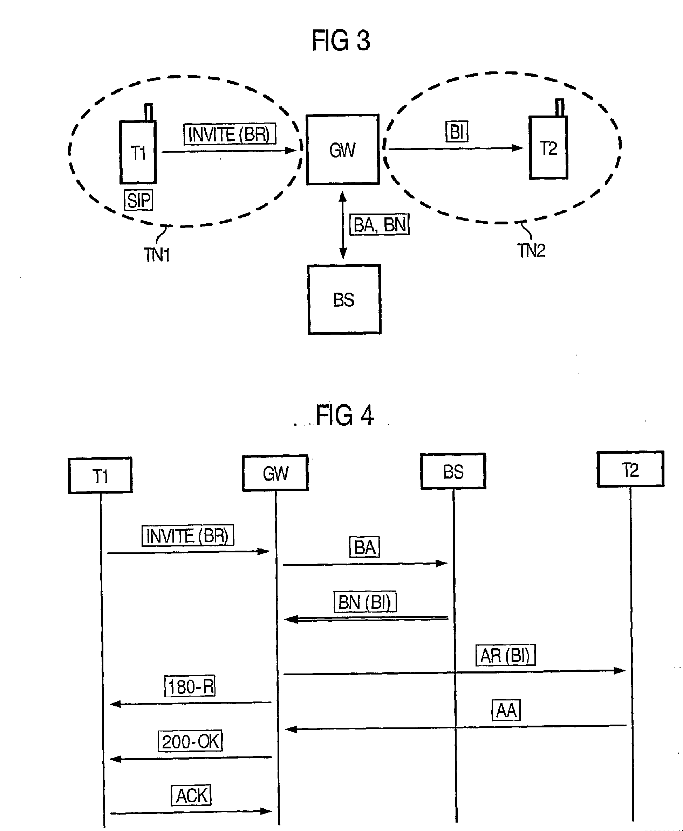

Es sei nun auf die Figuren 3 und 4 verwiesen, in denen ein Verfahren zum Aufbau einer Kommunikationsverbindung gemäß einer ersten Ausführungsform der vorliegenden Erfindung beschrieben ist. Zunächst sei dabei auf Figur 3 verwiesen, in der ein Blockschaltbild der wesentlichen Komponenten zum Aufbauen einer Kommunikationsverbindung zwischen zwei Telekommunikationsgeräten, insbesondere Mobiltelefonen T1 und T2 gezeigt ist. Im vorliegenden Fall soll nun eine Telefonverbindung (als Kommunikationsverbindung) von einem ersten Telekommunikationsgerät T1 in der Form eines Mobiltelefons über ein Telekommunikationsnetz (hier repräsentiert durch die Komponenten GW, TN1, TN2) zu einem zweiten Telekommunikationsgerät T2 in der Form eines Mobiltelefons aufgebaut werden. Das Telekommunikationsnetz umfasst hierbei zwei Teilnetze, wobei das erste Teilnetz TN1 dem ersten Mobiltelefon T1 zugeordnet ist und das zweite Teilnetz TN2 dem zweiten Mobiltelefon T2 zugeordnet ist. Die beiden Teilnetze sind schließlich über eine Vermittlungskomponente bzw. ein "Gateway" GW miteinander verbunden. Ferner umfasst die Telekommunikationsanordnung nach Figur 3 eine Datenbereitstellungskomponente, hier in der Form eines Bildservers BS, welcher sich in einem auf einem Internet-Protokoll-basierenden Netz befindet und beispielsweise über ein http-Protokoll mit dem Gateway GW verbunden ist. Ferner wird davon ausgegangen, dass das erste Mobiltelefon T1 sich in einer Kommunikationssitzung gemäß dem SIP-Protokoll befindet bzw. das SIP-Protokoll unterstützt, währen das zweite Mobiltelefon T2 das SIP-Protokoll nicht unterstützt. Außerdem sei erwähnt, dass das Mobiltelefon T2 nicht in der Lage ist, die oben erwähnte "Content Indirection" zu unterstützen, jedoch auf eine andere Weise, beispielsweise mittels instantaner bzw. sofortiger Nachricht(en) ("Instant Message") in der Lage ist, Bilder bzw. Datenobjekte zu empfangen.

Nach Erläuterung der Komponenten der Telekommunikationsanordnung soll nun anhand von Figur 4 der Ablauf zum Aufbauen einer Telekommunikationsverbindung bzw. Telefonverbindung vom ersten Mobiltelefon T1 zum zweiten Mobiltelefon T2 einschließlich der Übertragung eines Anrufbildes erläutert werden. Es sei darauf hingewiesen, dass die Bezeichnung Bild bzw. Bilddaten hier nur beispielhaft gewählt ist und sich allgemein auf Datenobjekte beziehen kann, welche allgemein Multimedia-Inhalte wie Klingeltöne, Texte bzw. Textdateien oder Bilder beinhalten können.

Zum Aufbauen einer Telefonverbindung übermittelt nun das erste Mobiltelefon T1 zunächst eine Verbindungsaufbaunachricht über das erste Teilnetz TN1 an das Gateway GW. Dies geschieht mittels der SIP-Nachricht INVITE, wobei hierzu eine entsprechende Nachricht INVITE vom ersten Mobiltelefon zum Gateway gesendet wird. Da jedoch das zweite Mobiltelefon T2 das SIP-Protokoll nicht unterstützt, wird die vom ersten Mobiltelefon T1 begonnene SIP-Kommunikation nicht direkt durch das Telekommunikationsnetz an das Mobiltelefon T2 weitergegeben, sondern diese wird durch das Gateway GW in eine entsprechende Signalisierung des zweiten Telekommunikationsnetzes bzw. Telefonnetzes TN2 von T2 umgesetzt. Nur die umgesetzte Signalisierung wird dann an das zweite Mobiltelefon T2 weitergegeben, während die SIP-Dialoge nur zwischen dem ersten Mobiltelefon T1 und dem Gateway GW geführt werden.

In der Nachricht INVITE wird ferner ein Bild des ersten Telekommunikationsteilnehmers mittels "Content Indirection" bzw. mittels einer Referenz BR vom ersten Mobiltelefon T1 an das zweite Mobiltelefon T2 mitgesendet. Das Gateway GW verarbeitet nun die Referenz BR, um unter Verwendung dieser Referenz das entsprechende Bild vom Bildserver BS anzufordern. Dies geschieht mittels der Bildanforderungsnachricht BA, ansprechend auf welche der Bildserver BS mittels einer Bildzustellnachricht BN das eigentliche Bild bzw. den eigentlichen Bildinhalt BI an das Gateway sendet (gekennzeichnet durch einen Doppelpfeil). Die Kommunikation zwischen dem Gateway GW und dem Bildserver BS findet dabei mittels http statt.

Das vom Bildserver BS übertragene Bild BI wird nun im Rahmen einer Rufsignalisierungsnachricht AR an das zweite Mobiltelefon T2 übertragen. Das Bild BI kann nun auf einer Anzeigeeinrichtung des zweiten Mobiltelefons T2 angezeigt werden, während zum Erwecken der Aufmerksamkeit des dem zweiten Mobiltelefon zugeordneten zweiten Teilnehmers ein Klingelton abgespielt wird. Während des Abspielens des Klingeltons beantwortet das Gateway die oben dargestellte INVITE-Nachricht mit der vorläufigen Antwort ("Provisional Response") 180-R, um den Anrufer darüber zu informieren, dass das der Bildreferenz BR entsprechende Bild BI zum zweiten Mobiltelefon übertragen worden ist bzw. dass es dort "klingelt".

Entscheidet sich der zweite Teilnehmer, den Ruf des ersten Teilnehmers anzunehmen, so veranlasst er, dass vom zweiten Mobiltelefon eine Anrufannahmenachricht AA an das Gateway GW übertragen wird, wobei das Gateway GW diese Anrufannahme bzw. Bestätigung in eine SIP-Bestätigungsnachricht 200-OK übersetzt und diese Nachricht dem ersten Mobiltelefon T1 zukommen lässt. Schließlich bestätigt das erste Mobiltelefon T1 diese Nachricht 200-OK wiederum mit der Bestätigungsnachricht ACK, so dass nun die Kommunikationsverbindung bzw. Telefonverbindung zwischen dem ersten Mobiltelefon und dem zweiten Mobiltelefon zustande kommt.

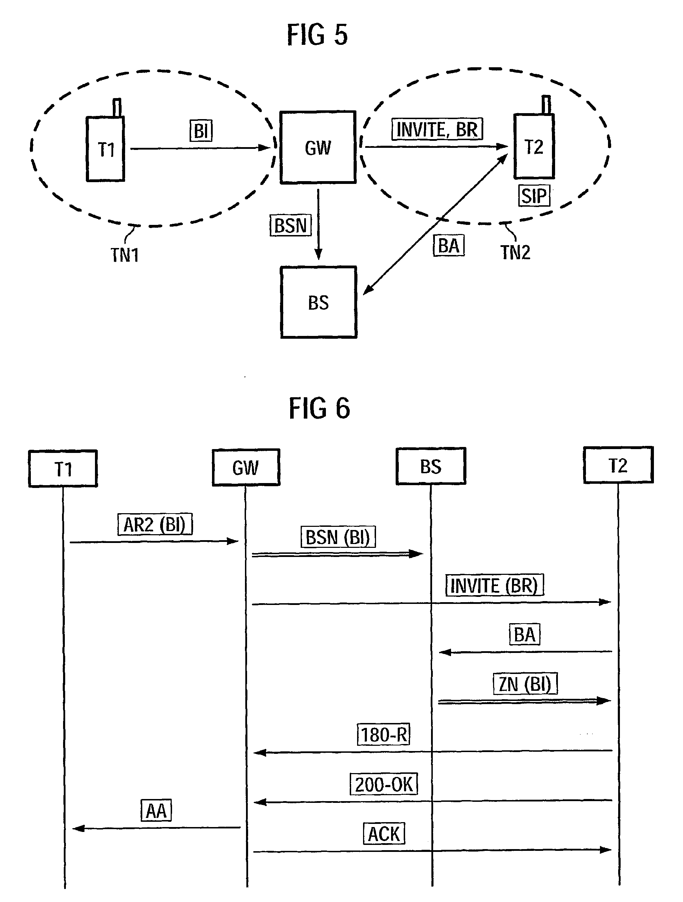

Es sei nun auf die Figuren 5 und 6 verwiesen, in denen eine zweite Ausführungsform der Erfindung zum Aufbauen einer Kommunikationsverbindung bzw. Telefonverbindung von einem ersten Mobiltelefon zu einem zweiten Mobiltelefon dargestellt ist. Kennzeichen dieser Ausführungsform ist es, dass im Gegensatz zur ersten Ausführungsform nun das erste Mobiltelefon T1 das SIP-Protokoll nicht unterstützt, während das zweite Mobiltelefon T2 das SIP-Protokoll unterstützt. Es sei wiederum erwähnt, dass das erste Mobiltelefon T1 nicht in der Lage ist, die oben erwähnte "Content Indirection" zu unterstützen, jedoch auf eine andere Weise, beispielsweise mittels instantaner bzw. sofortiger Nachricht(en) ("Instant Message") in der Lage ist, Bilder bzw. Datenobjekte zu empfangen.

Zunächst sei einmal auf Figur 5 verwiesen, in der ein Blockschaltbild mit den wesentlichen Komponenten zum Aufbauen einer Kommunikationsverbindung gemäß der zweiten Ausführungsform gezeigt ist. Dabei umfasst die Telekommunikationsanordnung ein erstes Telekommunikationsgerät in der Form eines Mobiltelefons T1, das eine Kommunikationsverbindung bzw. Telefonverbindung zu einem zweiten Telekommunikationsgerät in der Form eines Mobiltelefons T2 über ein Telekommunikationsnetz (repräsentiert durch die Komponenten GW, TN1, TN2) aufbauen möchte. Im vorliegenden Fall soll - wie auch schon bei der ersten Ausführungsform - das Telekommunikationsnetz zwei Teilnetze aufweisen, wobei das erste Mobiltelefon T1 dem ersten Teilnetz TN1 und das zweite Mobiltelefon T2 dem zweiten Teilnetz TN2 zugeordnet ist. Die beiden Teilnetze sind schließlich über eine Vermittlungskomponente, ein Gateway GW miteinander verbunden. Ferner ist das Gateway mit einer Datenbereitstellungskomponente bzw. einem Bildserver BS verbunden, auf dem Datenobjekte insbesondere Bilder umfassend gespeichert sind. Die Signalisierung zwischen den einzelnen Komponenten zum Aufbauen einer Kommunikationsverbindung soll nun anhand von Figur 6 ausführlich erläutert werden.

Zum Aufbauen einer Kommunikationsverbindung bzw. Telefonverbindung von dem ersten Mobiltelefon T1 zum zweiten Mobiltelefon T2 wird gemäß Figur 6 zunächst vom ersten Mobiltelefon T1 eine Verbindungsaufbaunachricht AR2 an das Gateway GW gesendet. Das bedeutet, dass - wie bei der ersten Ausführungsform - die Kommunikation nicht direkt vom ersten Teilnetz TN1, das dem ersten Mobiltelefon zugeordnet ist, direkt an das zweite Teilnetz TN2, das dem zweiten Mobiltelefon zugeordnet ist, weitergegeben wird, sondern dass vielmehr das Gateway GW als Schnittstelle dient und die Signalisierung des ersten Teilnetzes in eine SIP-Signalisierung für das zweite Teilnetz umsetzt. SIP-Dialoge werden dann nur zwischen dem Gateway GW und dem zweiten Teilnetz bzw. dem zweiten Mobiltelefon geführt. Das bedeutet nun, dass nach Erhalt der Verbindungsaufbaunachricht AR2, in der ferner auch ein Bild BI des dem ersten Mobiltelefon zugeordneten Telekommunikationsteilnehmers enthalten ist, das Gateway das Bild in einen SIP-Kontext bzw. eine SIP-Signalisierung umsetzt, indem es das Bild bzw. den Bildinhalt BI mittels einer Bildspeichernachricht BSN dem Bildserver BS zusendet. Wiederum kann sich der Bildserver in einem auf einem Internet-Protokoll basierenden Netz befinden, wobei der Bildserver BS über ein http-Protokoll mit dem Gateway GW in Verbindung steht. So kann dann das Bild BI per http dem Bildserver zugesendet und dort deponiert bzw. gespeichert werden. Ist das Bild auf dem Bildserver gespeichert, so lädt das Gateway GW das zweite Mobiltelefon T2 mittels einer INVITE-Nachricht diese zu einer Kommunikationssitzung bzw. "Session" ein, d. h. die INVITE-Nachricht stellt eine Rufsignalisierungsnachricht dar, die dem zweiten Mobiltelefon T2 angibt, dass ein erster Teilnehmer bzw. dessen zugeordnetes erstes Mobiltelefon T1 eine Kommunikationsverbindung bzw. Telefonverbindung aufbauen möchte. In der INVITE-Nachricht ist ferner eine Bildreferenz BR eingefügt, die den Ort angibt, bei dem das der Bildreferenz zugehörige Bild BI gespeichert ist (hier wie oben erwähnt bei dem Bildserver BS). Gemäß einer vorteilhaften Ausgestaltung ist es dabei möglich, dass schon zu diesem Zeitpunkt, d. h. nach Eintreffen der INVITE-Nachricht, dem dem zweiten Mobiltelefon T2 zugeordneten Teilnehmer vom zweiten Mobiltelefon ein akustisches Signal beispielsweise in der Form eines Klingeltons ausgegeben wird, das auf den eingehenden Ruf hinweist.

In einem nächsten Schritt fordert nun das zweite Mobiltelefon T2 mittels einer Bildanforderungsnachricht BA unter Verwendung der Bildreferenz BR das der Bildreferenz zugeordnete Bild vom Bildserver BS an. Ansprechend auf die Bildanforderungsnachricht BA übermittelt der Bildserver BS mittels einer Zustellnachricht ZN das der Bildreferenz zugeordnete Bild BI an das zweite Mobiltelefon T2. Somit kann das Bild des ersten Telekommunikationsteilnehmers als Anrufbild durch das zweite Mobiltelefon dem zweiten Telekommunikationsteilnehmer angezeigt werden. Wie bereits erwähnt, kann das Abspielen eines akustischen Signals wie eines Klingeltons entweder direkt nach Eingehen der INVITE-Nachricht beim zweiten Mobiltelefon oder nach Eingehen der Zustellnachricht ZN mit dem Bild BI abgespielt werden. In Abhängigkeit davon, wann das akustische Signal vom zweiten Mobiltelefon abgegeben wird, d. h. wann es bei dem zweiten Mobiltelefon "klingelt", wird eine vorläufige Antwort (Provisional Response) 180-R vom zweiten Mobiltelefon T2 an das Gateway GW gesendet (als eine Bestätigung dafür, dass das zweite Mobiltelefon die Rufsignalisierung erhalten hat, und dass der zweite Teilnehmer beispielsweise durch ein akustisches Signal in Kenntnis gesetzt wird).

Nachdem nun der zweite Teilnehmer vom Anruf des ersten Teilnehmers in Kenntnis gesetzt worden ist, kann er den Anruf entweder annehmen oder abweisen. Entscheidet er sich dafür, den Anruf anzunehmen, so teilt er das dem zweiten Mobiltelefon T2 über eine entsprechende Benutzerschnittstelle mit, woraufhin das zweite Mobiltelefon T2 eine Anrufannahmenachricht 200-OK an das Gateway sendet. Diese (positive) Antwort wird schließlich vom Gateway GW in eine Bestätigung umgesetzt, welche dann in Form einer Annahmeinformationsnachricht AA zum ersten Mobiltelefon T1 geleitet wird. Entsprechend bestätigt das Gateway GW ferner die Anrufannahmenachricht 200-OK des zweiten Mobiltelefons und leitet auch diesem eine Bestätigungsnachricht in Form der Nachricht ACK zu. Somit ist dann eine Kommunikationsverbindung bzw. Telefonverbindung zwischen dem ersten Mobiltelefon T1 und dem zweiten Mobiltelefon T2 zustande gekommen.

Es sei erwähnt, dass das die beiden Mobiltelefone T1 und T2 verbindende Telekommunikationsnetz, insbesondere die beiden den Mobiltelefonen zugeordneten Teilnetze beispielsweise gemäß dem GSM(Global System for Mobile Communication)-Standard oder dem UMTS(Universal Mobile Telecommunications System)-Standard arbeiten können.

Ferner sei erwähnt, dass gemäß einer vorteilhaften Ausgestaltung insbesondere bei der in den Figuren 5 und 6 dargestellten Ausführungsform ein Bild nicht unbedingt im ersten Mobiltelefon (im Mobiltelefon des Anrufers) gespeichert und mit einer Verbindungsaufbaunachricht zum Telekommunikationsnetz bzw. Gateway GW gesendet werden muss, sondern dass das einem Anrufer bzw. ersten Teilnehmer zugeordnete Anrufbild auch schon im Telekommunikationsnetz, im Fall eines Mobilfunknetzwerks, beispielsweise im HLR (Home Location Register) abgelegt sein kann und von dort über das Gateway GW zu einem Bildserver bei einem Anruf bzw. Aufbau einer Kommunikationsverbindung übertragen wird. Somit wird beispielsweise die Luftschnittstelle zwischen dem ersten Mobiltelefon T1 und dem Telekommunikationsnetz entlastet.

Mit den oben beschriebenen Mechanismen ist es nicht nur möglich, Bilder (bzw. allgemein Datenobjekte) vom Anrufer zum Angerufenen zu übertragen, sondern auch Bilder vom angerufenen zum anrufenden Teilnehmer bzw. dessen Mobiltelefon, oder wie gerade erläutert, vom Telekommunikationsnetz an den Anrufer. Dabei kann die Übertragung von Bildern bzw. Datenobjekten vom Angerufenen zum Anrufer im Anschluss an ein oben dargestelltes Verfahren erfolgen oder als ein eigenständiges Verfahren. Das bedeutet im einen Fall (bei dem der Anrufer ein Verfahren, wie beispielsweise SIP unterstützt, und der Angerufene nicht) kann der Angerufene ansprechend auf eine Rufsignalisierungsnachricht eines Anrufers ein ihm zugeordnetes Datenobjekt in einer Nachricht zum Telekommunikationsnetz senden, wobei das Datenobjekt dann durch das Telekommunikationsnetz auf einer Datenbereitstellungskomponente gespeichert wird. Ferner wird eine Antwortnachricht (Verbindungsaufbaunachricht) vom Telekommunikationsnetz zu dem Anrufer übertragen, wobei in der Antwortnachricht eine Referenzinformation vorgesehen ist, welche auf die Datenbereitstellungskomponente hinweist, auf der das Datenobjekt Angerufenen gespeichert ist. Schließlich wird der Datenbereitstellungskomponente von Anrufer bzw. dessen Telekommunikationsgerät aus unter Verwendung der Referenzinformation signalisiert, dass die Datenbereitstellungskomponente das dem Angerufenen zugeordnete Datenobjekt an das zweite Telekommunikationsgerät überträgt. Anschließend wird das Datenobjekt von der Datenbereitstellungskomponente zum Anrufer übermittelt und dort abgespielt bzw. (im Fall eines Bildes) angezeigt. Im anderen Fall (bei dem der Angerufene ein Verfahren, wie beispielsweise SIP unterstützt, und der Anrufer nicht) kann der Angerufene ein Datenobjekt auf einer Datenbereitstellungskomponente speichern. Ansprechend auf die Rufsignalisierungsnachricht vom Telekommunikationsnetz sendet der Angerufene bzw. dessen Telekommunikationsgerät eine Nachricht mit einer Bildreferenzinformation, die auf das in der Datenbereitstellungskomponente gespeicherte Datenobjekt von ihm hinweist, zu dem Telekommunikationsnetz. Dieses signalisiert der Datenbereitstellungskomponente unter Verwendung der Referenzinformation, dass die Datenbereitstellungskomponente das gespeicherte Datenobjekt an das Telekommunikationsnetz überträgt. Anschließend übermittelt die Datenbereitstellungskomponente das Datenobjekts zum Telekommunikationsnetz. Schließlich wird eine Antwortnachricht vom Telekommunikationsnetz zu dem Anrufer übertragen, wobei in dieser Nachricht das übermittelte Datenobjekt des Angerufenen vorgesehen ist. Das übertragene Datenobjekt kann dann beim Anrufer abgespielt bzw. angezeigt werden.

Zusammenfassend kann also gesagt werden, dass der Grundgedanke der beiden in den Figuren 3 bis 6 dargestellten Ausführungsformen darin besteht, eine Architektur und Signalisierung zu schaffen, um Anrufbilder, die herkömmlicher Weise von SIP-Protokoll-unterstützenden Telefonen per "Content Idirection" übertragen werden, nun auch zwischen SIP-unterstützenden Telefonen und nicht-SIP-unterstützenden Telefonen ausgetauscht werden können. Das bedeutet, dass an Stelle des Inhaltes eines Anrufbildes eines SIP-unterstützenden Telefons, das SIP-Telefon eine Referenz auf das Bild versendet. Wenn der Empfänger das SIP-Protokoll nicht unterstützt, wird das Bild vom Telekommunikationsnetz (insbesondere einem Gateway) entsprechend der Referenz geladen und an das Empfänger-Telefon übertragen. Umgekehrt wird das Anrufbild eines nicht-SIP-unterstützenden anrufenden Telefons im Telekommunikationsnetz abgelegt und dem angerufenen SIP-unterstützenden Telefon eine Referenz auf das abgelegte Bild zugeschickt. Insbesondere ist es dabei für ein SIP-unterstützendes Telefon vorteilhaft, dass es nicht die eigentlichen Bildinhalte übertragen muss, und zwar auch dann nicht, wenn das SIP-unterstützende Telefon das Bild (in Form einer Referenz) verschickt. Dadurch werden weniger Übertragungs-Ressourcen benötigt. Weiterhin wird eine sehr flexible Möglichkeit der Bildbereitstellung gestattet. Bilder können entsprechend allen Formen unterstützter URI bereitgestellt werden (beispielsweise können die Bilder per http bereitgestellt werden).

## Patentansprüche

1. Verfahren zum Aufbauen einer Kommunikationsverbindung von einem ersten Telekommunikationsgerät (T1) eines ersten Telekommunikationsteilnehmers über ein Telekommunikationsnetz (GW) zu einem zweiten Telekommunikationsgerät (T2) mit folgenden Schritten:
- Senden einer Verbindungsaufbaunachricht (AR2) mit einem dem ersten Teilnehmer zugeordneten Datenobjekt (BI) zum Telekommunikationsnetz (GW), um die Kommunikationsverbindung aufzubauen;
- Speichern des Datenobjekts (BI) durch das Telekommunikationsnetz (GW) auf einer Datenbereitstellungskomponente (BS);
- Übertragen einer Rufsignalisierungsnachricht (INVITE) vom Telekommunikationsnetz zu dem zweiten Telekommunikationsgerät (T2), wobei in der Rufsignalisierungsnachricht eine Referenzinformation (BR) vorgesehen ist, welche auf die Datenbereitstellungskomponente (BS) hinweist, auf der das Datenobjekt (BI) des ersten Teilnehmers gespeichert ist;
- Signalisieren der Datenbereitstellungskomponente (BS) von dem zweiten Telekommunikationsgerät (T2) aus unter Verwendung der Referenzinformation (BR), dass die Datenbereitstellungskomponente (BS) das dem ersten Teilnehmer zugeordnete Datenobjekt an das zweite Telekommunikationsgerät überträgt;
- Übermitteln (ZN) des Datenobjekts (BI) von der Datenbereitstellungskomponente (BS) an das zweite Telekommunikationsgerät (T2);
- Abspielen des Datenobjekts (BI) beim zweiten Telekommunikationsgerät (T2).

2. Verfahren nach Anspruch 1,
bei dem das Telekommunikationsnetz ein erstes Teilnetz (TN1) aufweist, dem das erste Telekommunikationsgerät (T1) zugeordnet ist, und ein zweites Teilnetz (TN2) aufweist, dem das zweite Telekommunikationsgerät zugeordnet ist, wobei die beiden Teilnetze über eine Vermittlungskomponente (GW) mit einander verbunden sind.

3. Verfahren nach Anspruch 2,
bei dem die Vermittlungskomponente dafür ausgelegt ist, die Schritte des Speicherns und Übertragens durchzuführen.

4. Verfahren nach Anspruch 2 oder 3,
bei dem die Datenbereitstellungskomponente (BS) in einem auf einem Internet-Protokoll-basierenden Netz angeordnet ist, das mit der Vermittlungskomponente (GW) verbunden ist.

5. Verfahren nach einem der Ansprüche 1 bis 4,
bei dem die Referenzinformation einen URI aufweist.

6. Verfahren nach einem der Ansprüche 1 bis 5,
bei dem sich das zweite Telekommunikationsgerät (T2) in einer Kommunikationssitzung gemäß dem SIP-Protokoll befindet.

7. Verfahren nach Anspruch 6,
bei dem die Vermittlungskomponente (GW) als Rufsignalisierungsnachricht eine INVITE-Nachricht an das zweite Telekommunikationsgerät (T2) sendet, in welcher die Referenzinformation eingefügt ist.

8. Verfahren nach einem der Ansprüche 1 bis 7,
bei dem das Datenobjekt (BI) Bildinformationen, Toninformationen oder Textinformationen umfasst.

9. Verfahren nach einem der Ansprüche 1 bis 8,
bei dem das erste und/oder das zweite Telekommunikationsgerät (T1, T2) als ein Mobilfunkgerät, Mobiltelefon oder als ein Computer mit Funkmodul ausgebildet ist.

10. Verfahren nach einem der Ansprüche 1 bis 9,
bei dem das Telekommunikationsnetz ein Mobilfunknetz umfasst, das insbesondere nach dem GSM- oder UMTS-Standard arbeitet.

11. Telekommunikationsanordnung umfassend ein erstes und ein zweites Telekommunikationsgerät sowie ein Telekommunikationsnetzwerk und eine mit diesem verbundene Datenbereitstellungskomponente, wobei die Telekommunikationsanordnung derart ausgelegt ist, dass das erste Telekommunikationsgerät über das Telekommunikationsnetzwerk eine Kommunikationsverbindung zu dem zweiten Telekommunikationsgerät gemäß einem Verfahren der Ansprüche 1 bis 10 aufbaut.

## Claims

1. Method for the establishment of a communication link from a first telecommunication device (T1) of a first telecommunication subscriber to a second telecommunication device (T2) via a telecommunication network (GW) with the following steps:
- Sending a connection establishment message (AR2) with a data object (BI) allocated to the first subscriber (BI) to the telecommunication network (GW) in order to establish the communication link;
- Storing the data object (BI) via the telecommunication network (GW) on a data provision component (BS);
- Transmitting a call signalling message (INVITE) from the telecommunication network to the second telecommunication device (T2), wherein the call signalling message provides reference information (BR), which refers to the data provision component (BS) on which the data object (BI) of the first subscriber has been stored;
- Signalling the data provision component (BS) from the second telecommunication device (T2) by using the reference information (BR) that the data provision component (BS) transmits the data object to the second telecommunication device allocated to the first subscriber;
- Transmitting (ZN) the data object (BI) from the data provision component (BS) to the second telecommunication device (T2);
- Playing the data object (BI) at the second telecommunication device (T2).

2. Method according to claim 1,
in which the telecommunication network has a first subnetwork (TN1) to which the first telecommunication device (T1) has been allocated and a second subnetwork (TN2) to which the second telecommunication device has been allocated, wherein the two subnetworks are connected with each other via a switching component (GW).

3. Method according to claim 2,
in which the switching component is embodied in such a way that it can carry out the steps of the storing and transmitting process.

4. Method according to claim 2 or 3,
in which the data provision component (BS) is arranged on a network based on an Internet protocol, which is connected to the switching component (GW).

5. Method according to one of claims 1 to 4,
in which the reference information has a URI.

6. Method according to one of claims 1 to 5,
in which the second telecommunication device (T2) is in a communication session in accordance with the SIP protocol.

7. Method according to claim 6,
in which the switching component (GW), as a call signalling message, sends an INVITE message to the second telecommunication device (T2) into which the reference information has been inserted.

8. Method according to one of claims 1 to 7,
in which the data object (BI) includes picture information, tone information and text information.

9. Method according to one of claims 1 to 8,
in which the first and/or the second telecommunication device (T1, T2) is embodied as a mobile radio device, a mobile telephone or a computer with a radio module.

10. Method according to one of claims 1 to 9,
in which the telecommunication network includes a mobile radio network which in particular functions according to the GSM standard or the UMTS standard.

11. Telecommunication arrangement including a first and a second telecommunication device as well as a telecommunication network and a data provision component connected to it, wherein the telecommunication arrangement is designed so that the first telecommunication device establishes a communication link to the second telecommunication device via the telecommunication network in accordance with a method of claims 1 to 10.

## Revendications

1. Procédé pour établir une liaison de communication d'un premier appareil de télécommunication (T1) d'un premier abonné des télécommunications vers un deuxième appareil de télécommunication (T2) via un réseau de télécommunication (GW), comportant les étapes suivantes :
- envoi, au réseau de télécommunication (GW), d'un message d'établissement de liaison (AR2) avec un objet de données (BI) associé au premier abonné pour établir la liaison de communication ;
- stockage de l'objet de données (BI) par le réseau de télécommunication (GW) sur un composant de mise à disposition de données (BS) ;
- transmission d'un message de signalisation d'appel (INVITE) du réseau de télécommunication au deuxième appareil de télécommunication (T2), dans le message de signalisation d'appel étant prévue une information de référence (BR) qui fait référence au composant de mise à disposition de données (BS) sur lequel est stocké l'objet de données (BI) du premier abonné ;
- signalisation du composant de mise à disposition de données (BS), depuis le deuxième appareil de télécommunication (T2), avec utilisation de l'information de référence (BR), indiquant que le composant de mise à disposition de données (BS) transmet au deuxième appareil de télécommunication l'objet de données associé au premier abonné ;
- transmission (ZN) de l'objet de données (BI) du composant de mise à disposition de données (BS) au deuxième appareil de télécommunication (T2) ;
- lecture de l'objet de données (BI) sur le deuxième appareil de télécommunication (T2).

2. Procédé selon la revendication 1, selon lequel le réseau de télécommunication comporte un premier sous-réseau (TN1) auquel est associé le premier appareil de télécommunication (T1), et un deuxième sous-réseau (TN2) auquel est associé le deuxième appareil de télécommunication, les deux sous-réseaux étant reliés entre eux via un composant de commutation (GW).

3. Procédé selon la revendication 2, selon lequel le composant de commutation est conçu pour exécuter les étapes de stockage et de transmission.

4. Procédé selon la revendication 2 ou 3, selon lequel le composant de mise à disposition de données (BS) est agencé dans un réseau basé sur un protocole internet qui est relié au composant de commutation (GW).

5. Procédé selon l'une des revendications 1 à 4, selon lequel l'information de référence comporte un URI.

6. Procédé selon l'une des revendications 1 à 5, selon lequel le deuxième appareil de télécommunication (T2) se trouve dans une session de communication selon le protocole SIP.

7. Procédé selon la revendication 6, selon lequel le composant de commutation (GW) envoie au deuxième appareil de télécommunication (T2), en tant que message de signalisation d'appel, un message INVITE dans lequel est insérée l'information de référence.

8. Procédé selon l'une des revendications 1 à 7, selon lequel l'objet de données (BI) comprend des informations de type image, des informations audio ou des informations textuelles.

9. Procédé selon l'une des revendications 1 à 8, selon lequel le premier et/ou le deuxième appareil de télécommunication (T1, T2) sont réalisés en tant qu'appareil radio mobile, téléphone mobile ou ordinateur avec module radio.

10. Procédé selon l'une des revendications 1 à 9, selon lequel le réseau de télécommunication comprend un réseau radio mobile qui fonctionne en particulier selon la norme GSM ou UMTS.

11. Ensemble de télécommunication, comprenant un premier et un deuxième appareil de télécommunication ainsi qu'un réseau de télécommunication et un composant de mise à disposition de données qui y est relié, l'ensemble de télécommunication étant conçu de telle sorte que le premier appareil de télécommunication établit une liaison de communication vers le deuxième appareil de télécommunication via le réseau de télécommunication selon un procédé des revendications 1 à 10.
